# EUROPEAN PATENT APPLICATION

(11) **EP 4 831 887 A1**
(43) Date of publication of application: **28.10.2026**
(21) Application number: 24906169.8
(22) Date of filing: 09.12.2024
(51) Int. Cl.: G06Q 10/0639

(54) **CHARGING STATION RECOMMENDATION METHOD, CHARGING STATION RECOMMENDATION APPARATUS, AND CHARGING STATION RECOMMENDATION SYSTEM**

(30) Priority: 19.12.2023 CN 202311753205
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: ZHI, Youpeng, Ningbo, Zhejiang 315899 (CN); ZHANG, Cong, Ningbo, Zhejiang 315899 (CN); ZHENG, Laiwei, Ningbo, Zhejiang 315899 (CN)
(74) Representative: Range, Christopher William
(86) International application number: PCT/CN2024/137922
(87) International publication number: WO 2025/130686

(57) **Abstract**

Provided are a charging station recommendation method, apparatus, and system. The recommendation method includes: obtaining charging station information about one or more charging stations within a predetermined distance range, in which the predetermined distance range is a drivable distance range of a vehicle based on remaining battery charge; generating an operation score for each charging station based on its charging data; generating a device score for each charging station based on its charging pile information; generating a service score for each charging station based on the service information; generating a user evaluation score for each charging station based on the user evaluation information; and ranking the charging stations based on operation scores, device scores, service scores, and user evaluation scores, generating a ranking result for the charging stations, and recommending the ranking result to a user. In this way, the user can select a charging station with high cost performance and good service, and select a good charging pile based on the device score, which saves a time for the user to select the charging station or the charging pile and improves user's charging experience.

## Description

### CROSS-REFERENCE TO RELATED APPLICATIONS

The present application claims priority to Chinese Patent Application No. 202311753205.2 filed on December 19, 2023 and entitled "CHARGING STATION RECOMMENDATION METHOD, APPARATUS, AND SYSTEM", the entire disclosure of which is incorporated herein by reference.

### FIELD

The present disclosure relates to the technical field of new energy vehicles, and in particular, to a charging station recommendation method, apparatus, and system.

### BACKGROUND

With the development of new energy vehicles, their ownership continues to rise. However, the new energy vehicles usually need to be charged through charging piles at charging stations. As charging stations are service-oriented venues, users cannot ascertain the quality of services provided by such charging stations beforehand, which results in users having to search back and forth for suitable charging stations or charging piles, wasting their time and diminishing their user experience.

### SUMMARY

The present disclosure provides a charging station recommendation method, apparatus, and system.

Embodiments of the present disclosure provide a charging station recommendation method. The charging station recommendation method includes: obtaining charging station information about one or more charging stations within a predetermined distance range, in which the predetermined distance range is a drivable distance range of a vehicle based on remaining battery charge, and the charging station information includes charging data, charging pile information, service information, and user evaluation information of each of the charging stations; for each of the charging stations, generating an operation score for the charging station based on the charging data of the charging station; for each of the charging stations, generating a device score for the charging station based on the charging pile information of the charging station; for each of the charging stations, generating a service score for the charging station based on the service information; for each of the charging stations, generating a user evaluation score for the charging station based on the user evaluation information; and ranking the charging stations based on the operation score, the device score, the service score, and the user evaluation score, generating a ranking result for the charging stations, and recommending the ranking result to a user.

In some embodiments, said generating the operation score for the charging station based on the charging data of the charging station includes: obtaining charging data of the charging station within a first predetermined time period based on the charging station information; calculating a daily average charging time length, a daily average charging capacity, a daily average number of charging times, and an average charging unit price of the charging station based on the charging data; and calculating the operation score of the charging station based on the daily average charging time length, the daily average charging capacity, the daily average number of charging times, and the average charging unit price.

In some embodiments, said generating the device score for the charging station based on the charging pile information of the charging station includes: obtaining an online utilization rate, a failure rate, a pile charging interruption rate, average power, and years in service of one or more charging piles based on the charging pile information; and calculating the device score of the charging station based on the online utilization rate, the failure rate, the pile charging interruption rate, the average power, and the years in service.

In some embodiments, the recommendation method further includes: generating, in response to the user selecting a charging station among the one or more charging stations, first navigation information based on the selected charging station; and in response to the user arriving at the selected charging station based on the first navigation information, ranking, based on the device score of the selected charging station, charging piles of the selected charging station for the user to select.

In some embodiments, the recommendation method further includes: generating, in response to the user selecting a charging pile among the charging piles, second navigation information based on the selected charging pile; and performing charging using the selected charging pile in response to the user arriving at the selected charging pile based on the second navigation information.

In some embodiments, the recommendation method further includes: generating first prompt information in response to a charging anomaly occurring at the selected charging pile; and performing recharging based on the first prompt information.

In some embodiments, the recommendation method further includes: generating second prompt information in response to the charging anomaly occurring at the selected charging pile; and switching to another charging pile for charging based on the second prompt information.

In some embodiments, the recommendation method further includes: inspecting each of the charging piles of the selected charging station in response to the charging anomaly occurring at the switched-to charging pile; and generating the second prompt information in response to any of the inspected charging piles being normal; or in response to each of the inspected charging piles being abnormal, generating ranking result of the charging stations and recommending the ranking result to the user.

The embodiments of the present disclosure provide a charging station recommendation apparatus. The recommendation apparatus includes: an obtaining module configured to obtain charging station information about one or more charging stations within a predetermined distance range, where the predetermined distance range is a drivable distance range of a vehicle based on remaining battery charge, and the charging station information includes charging data, charging pile information, service information, and user evaluation information of each of the charging stations; a first generation module configured to generate, for each of the charging stations, an operation score for the charging station based on the charging data of the charging station; a second generation module configured to generate, for each of the charging stations, a device score for the charging stations based on the charging pile information of the charging station; a third generation module configured to generate, for each of the charging stations, a service score for the charging station based on the service information; a fourth generation module configured to generate, for each of the charging stations, a user evaluation score for the charging station based on the user evaluation information; and a ranking module configured to rank the charging stations based on the operation score, the device score, the service score, and the user evaluation scores, generate a ranking result for the charging stations, and recommend the ranking result to a user.

The embodiments of the present disclosure provide a charging station recommendation system. The recommendation system includes: a cloud server configured to store charging station information, generate an operation score, a device score, a service score, and a user evaluation score based on the charging station information, rank one or more charging stations, generate a ranking result for the charging stations, and transmit the ranking result to a vehicle terminal; and a mobile terminal configured to obtain real-time data of a vehicle, determine a predetermined distance range based on the real-time data, and transmit the predetermined distance range to the cloud server. The mobile terminal is further configured to receive the ranking result and display the ranking result to a user.

In the charging station recommendation method of the present disclosure, all charging stations within the drivable range of the vehicle are determined based on the vehicle's remaining battery charge, ensuring that the vehicle can travel to the charging station for charging. By obtaining the charging station information, the charging data, charging pile information, service information, and user evaluation information of the charging station can be obtained. The operation score can be generated based on the charging data, enabling the user to know charging cost performance of the charging station based on the operation score. The device score can be generated based on the charging pile information, enabling the user to know use status of the charging pile based on the device score. The service score can be generated based on the service information, enabling the user to assess the service quality of the charging station based on the service score, to improve user's charging experience at the charging station. The user evaluation score can be generated based on the user evaluation information, enabling the user to determine evaluations of past customers on the charging station based on the user evaluation score, and thus to select a charging station that meets user's own expectations. The charging stations within the range can be ranked based on operation scores, device scores, service scores, and user evaluation scores, to recommend the ranking result to the user. In this way, the user can select a charging station with high cost performance and good service, and select a good charging pile based on the device score, which saves a time for the user to select the charging station or the charging pile and improves the user's charging experience.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a schematic flowchart of a charging station recommendation method according to an embodiment of the present disclosure;
FIG. 2 is a schematic module diagram of a charging station recommendation apparatus according to an embodiment of the present disclosure;
FIG. 3 is a schematic cooperation diagram of a charging station recommendation system according to an embodiment of the present disclosure;
FIG. 4 is a schematic flowchart of a charging station recommendation method according to an embodiment of the present disclosure;
FIG. 5 is a schematic flowchart of a charging station recommendation method according to an embodiment of the present disclosure;
FIG. 6 is a schematic flowchart of a charging station recommendation method according to an embodiment of the present disclosure;
FIG. 7 is a schematic flowchart of a charging station recommendation method according to an embodiment of the present disclosure;
FIG. 8 is a schematic flowchart of a charging station recommendation method according to an embodiment of the present disclosure;
FIG. 9 is a schematic flowchart of a charging station recommendation method according to an embodiment of the present disclosure; and
FIG. 10 is a schematic flowchart of a charging station recommendation method according to an embodiment of the present disclosure.

### DETAILED DESCRIPTION

Embodiments of the present disclosure will be described in detail below, and examples of the embodiments are shown in the accompanying drawings, in which identical or similar reference signs denote identical or similar elements or elements with identical or similar functions through the accompanying drawings. The following embodiments described with reference to the drawings are illustrative and intended to explain the present disclosure, rather than being interpreted as limitations on the present disclosure.

In the description of the present disclosure, it should be understood that, the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", and "anti-clockwise" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In addition, the terms "first" and "second" are used only for description and shall not be interpreted as an indication or implication of relative importance or an implicit indication of the number of technical features. Thus, features associated with "first" and "second" may include at least one or more such features, either explicitly or implicitly. In the description of the present disclosure, "a plurality of" means two or more, unless otherwise specifically defined.

In the description of the present disclosure, it should also be noted that, unless expressly specified and limited otherwise, the terms "mounted", "coupled", and "connected" should be understood in a broad sense. For example, it may be a fixed connection or a detachable connection or connection as one piece; mechanical connection or electrical connection or mutual communication; direct connection or indirect connection through an intermediate; and internal communication between two components or an interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may include that the first feature is in direct contact with the second feature, or further include that the first and second features are in indirect contact through another feature between the first and second features. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Various embodiments or examples for implementing different structures of the present disclosure are provided below. In order to simplify the description of the present disclosure, components and configurations of specific examples are described below. These specific examples are merely for the purpose of illustration, rather than limiting the present disclosure. In addition, the same reference numerals and/or reference letters may appear in different examples of the present disclosure for the purpose of simplicity and clarity, instead of indicating a relationship between different embodiments and/or the discussed configurations. In addition, the present disclosure provides examples of various specific processes and materials. However, applications of other processes and/or the use of other materials are conceivable for those of ordinary skill in the art.

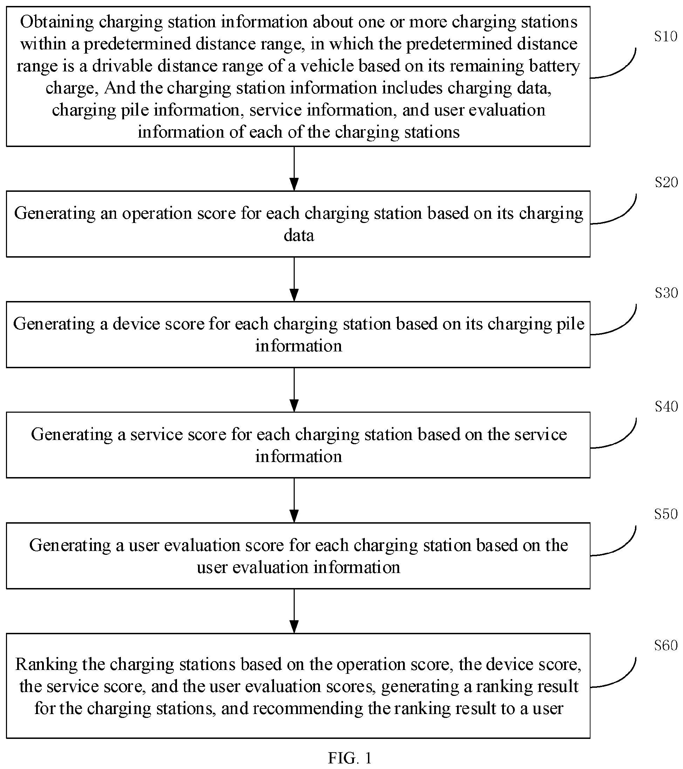

Referring to FIG. 1, an embodiment of the present disclosure provides a charging station recommendation method. The recommendation method includes operations at steps S10 to S60.

At step S10, charging station information about one or more charging stations within a predetermined distance range is obtained. The predetermined distance range is a drivable distance range of a vehicle, which is based on the vehicle's remaining battery charge. The charging station information includes charging data, charging pile information, service information, and user evaluation information of each of the charging stations.

At step S20, an operation score is generated for each charging station based on its charging data.

At step S30, a device score is generated for each charging station based on its charging pile information.

At step S40, a service score is generated for each charging station based on the service information.

At step S50, a user evaluation score is generated for each charging station based on the user evaluation information.

At step S60, the charging stations are ranked based on the operation score, the device score, the service score, and the user evaluation scores, a ranking result for the charging stations is generated, and the ranking result is recommended to a user.

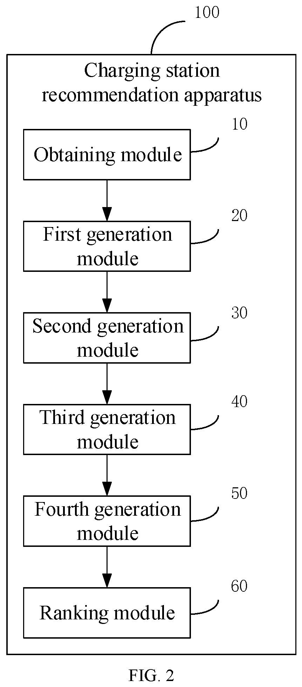

Referring to FIG. 2, an embodiment of the present disclosure provides a charging station recommendation apparatus 100. The recommendation apparatus 100 is configured to implement the recommendation method. The recommendation apparatus 100 includes an obtaining module 10, a first generation module 20, a second generation module 30, a third generation module 40, a fourth generation module 50, and a ranking module 60. The obtaining module10 is configured to obtain charging station information about one or more charging stations within a predetermined distance range. The predetermined distance range is a drivable distance range of a vehicle based on the vehicle's remaining battery charge. The charging station information includes charging data, charging pile information, service information, and user evaluation information of each of the charging stations. The first generation module 20 is configured to generate, for each of the charging stations, an operation score for the charging station based on the charging data of the charging station. The second generation module 30 is configured to generate, for each of the charging stations, a device score for the charging station based on the charging pile information of the charging station. The third generation module 40 is configured to generate, for each of the charging stations, a service score for the charging station based on the service information. The fourth generation module 50 is configured to generate, for each of the charging stations, a user evaluation score for the charging station based on the user evaluation information. The ranking module 60 is configured to rank the charging stations based on the operation score, the device score, the service score, and the user evaluation score, generate a ranking result for the charging stations, and recommend the ranking result to a user.

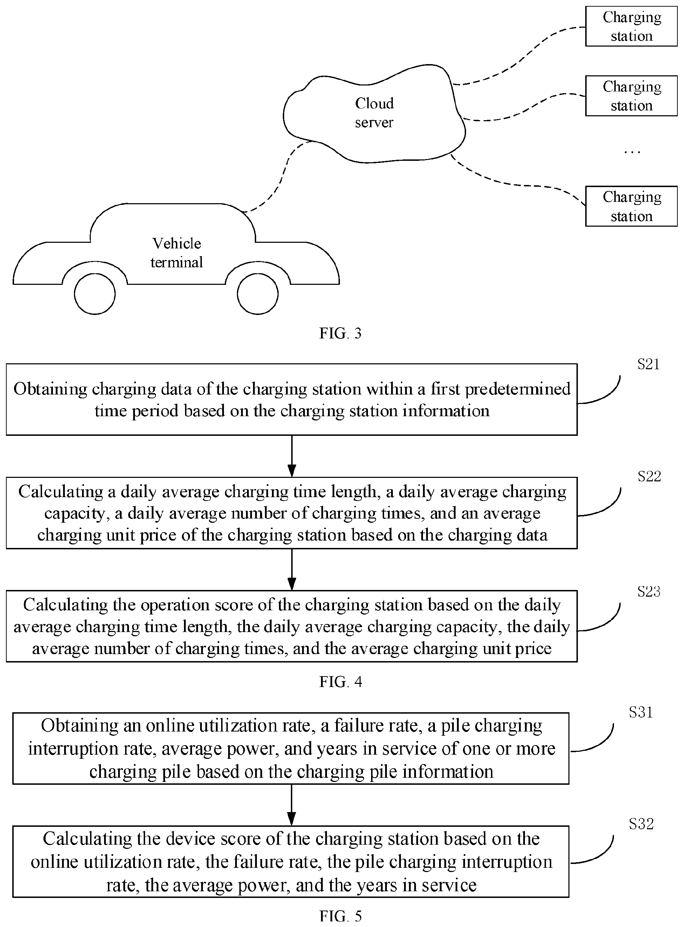

Referring to FIG. 3, an embodiment of the present disclosure provides a charging station recommendation system. The recommendation system includes a cloud server and a mobile terminal. The cloud server may perform information interaction with a vehicle terminal and a charging station separately. The cloud server is configured to store charging station information, generate an operation score, a device score, a service score, and a user evaluation score based on the charging station information, rank one or more charging stations, generate a ranking result for the charging stations, and transmit the ranking result to a vehicle terminal. The mobile terminal is configured to obtain real-time data of a vehicle, determine a predetermined distance range based on the real-time data, and transmit the predetermined distance range to the cloud server. The mobile terminal is further configured to receive the ranking result and display the ranking result to a user.

Specifically, in response to the vehicle meeting a charging condition, the vehicle terminal may obtain the real-time data of the vehicle and determine the predetermined distance range based on the real-time data. For example, in response to the vehicle's remaining battery charge being lower than 20%, or in response to a user expecting to charge the vehicle, the vehicle terminal obtains the vehicle's remaining battery charge and calculates a remaining drivable distance of the vehicle based on the vehicle's remaining battery, to determine the predetermined distance range. The vehicle terminal transmits the predetermined distance range to the cloud server. The cloud server determines all charging stations within the predetermined distance range based on the predetermined distance range and retrieves charging station information of all the charging stations. The charging station information includes charging data, charging pile information, service information, and user evaluation information.

The charging data may include a charging time length, a charging capacity, the number of charging times, a charging unit price, and the like of the charging station. Operation status of the charging station can be learned according to the charging data, to calculate the operation score of the charging station. The charging pile information may include use status, such as a utilization rate, a failure rate, charging power, years in service, and the like. The quality of all the charging piles in the charging station can be determined based on the charging pile information, to obtain the device scores for the charging piles.

Further, the service information may pertain to service facilities of the charging station. The service score can be determined based on the completeness of such service facilities. For example, the service information may include an indication of whether the charging station has a convenience store, business hours of the convenience store, an indication of whether a parking space has a ground lock, an indication of whether the charging station has a toilet, an indication of whether the charging station is open-air, and the like. The service score is set to a maximum of 100 points. A charging station that has a convenience store is awarded 35 points, while one without a convenience store receives 0 points. A convenience store with 24-hour business hours is awarded 10 points, while one not operating 24 hours receives 5 points. A parking space with a ground lock is awarded 10 points, while one without a ground lock receives 0 points. A charging station with a toilet is awarded 35 points, while one without a toilet receives 0 points. A charging station that is open-air is awarded 10 points, while one that is not open-air receives 0 points.

The user evaluation information may include a star rating and a written comment. The user evaluation score for the charging station can be obtained based on the user evaluation information. For example, the user evaluation score has a maximum score of 100 points, with the star rating accounting for 50 points and the remaining 50 points allocated to the written comment. An average star rating of 4.9 or above is awarded 50 points, with a deduction of 5 points for every 0.2 decrease in the average star rating. That is, an average star rating of 3.9 yields 25 points, and an average star rating below 3.9 results in 0 points. A minimum of 20 written comments is awarded 50 points, written comments ranging from 10 to 19 are awarded 30 points, and fewer than 10 written comments yield 0 points. Thus, the user evaluation score can be calculated. It can be understood that scoring criteria for star ratings and written comments can be configured as actual conditions, and are not limited herein.

In some embodiments, a maximum score for each of the operation score, the device score, the service score, and the user evaluation score may be set at 100 points. These scores are weighted as follows: the operation score accounts for 25%, the device score accounts for 25%, the service score accounts for 25%, and the user evaluation score accounts for 25%. Thus, comprehensive scores for the charging stations are calculated, and the charging stations are ranked based on the comprehensive scores, so that charging stations with higher comprehensive scores are prioritized for recommendation to the user. It is worth noting that weightings for the operation score, the device score, the service score, and the user evaluation score can be custom-set by the user to meet user's personalized needs.

In the charging station recommendation method of the present disclosure, all charging stations within the drivable range of the vehicle are determined based on the vehicle's remaining battery charge, ensuring that the vehicle can travel to the charging station for charging. By obtaining the charging station information, the charging data, charging pile information, service information, and user evaluation information of the charging station can be obtained. The operation score can be generated based on the charging data, enabling the user to know charging cost performance of the charging station based on the operation score. The device score can be generated based on the charging pile information, enabling the user to know use status of the charging pile based on the device score. The service score can be generated based on the service information, enabling the user to assess the service quality of the charging station based on the service score, to improve user's charging experience at the charging station. The user evaluation score can be generated based on the user evaluation information, enabling the user to determine evaluations of past customers on the charging station based on the user evaluation scores, and thus to select a charging station that meets user's own expectations. The charging stations within the range can be ranked based on the operation scores, device scores, service scores, and user evaluation scores, to recommend the ranking result to the user. In this way, the user can select a charging station with high cost performance and good service, and select a good charging pile based on the device score, which saves a time for the user to select the charging station or the charging pile and improves the user's charging experience.

Referring to FIG. 4, in some embodiments, step S20 includes operations at steps S21 to S23.

At step S21, charging data of the charging station within a first predetermined time period is obtained based on the charging station information.

At step S22, a daily average charging time length, a daily average charging capacity, a daily average number of charging times, and an average charging unit price of the charging station are calculated based on the charging data.

At step S23, the operation score of the charging station is calculated based on the daily average charging time length, the daily average charging capacity, the daily average number of charging times, and the average charging unit price.

In some embodiments, steps S21, S22, and S23 may be implemented by the first generation module 20. That is, the first generation module 20 is configured to obtain the charging data of the charging station within the first predetermined time period based on the charging station information, calculate the daily average charging time length, the daily average charging capacity, the daily average number of charging times, and the average charging unit price of the charging station based on the charging data, and calculate the operation score of the charging station based on the daily average charging time length, the daily average charging capacity, the daily average number of charging times, and the average charging unit price.

Specifically, in response to the cloud server obtaining the charging station information, the charging data of the charging station within the first predetermined time period can be obtained based on the charging station information. The first predetermined time period may be one month, one week, or the like. For example, when the first predetermined time period is one month, charging data within the preceding month can be obtained based on the charging station information. The charging data refers to all charging orders from the preceding month, i.e., the charging data may include a charging time length, a charging capacity, the number of charging times, and a charging fee. It can be understood that the daily average charging time length, the daily average charging capacity, the daily average number of charging times, and the average charging unit price of the charging station can be calculated based on the charging data.

Further, the operation score of the charging station can be calculated based on the daily average charging time length, the daily average charging capacity, the daily average number of charging times, and the average charging unit price. For example, a maximum operation score is 100 points, with the daily average charging time length, the daily average charging capacity, the daily average number of charging times, and the average charging unit price each accounting for 25 points. A daily average charging time length exceeding 20 hours is awarded 25 points, with 1 point deducted for each hour below this threshold. A daily average charging capacity exceeding 1,000 kilowatt-hours is awarded 25 points, with 1 point deducted for every 40 kilowatt-hours below this threshold. The daily average number of charging times exceeding 30 times is awarded 25 points, with each reduction of one charging time deducting one point, down to a minimum of zero points. An average charging unit price exceeding 1,000 Yuan is awarded 25 points, with each reduction of 40 Yuan deducting one point. The operation score for the charging station is thus calculated by summing scores for the daily average charging time length, the daily average charging capacity, the daily average number of charging times, and the average charging unit price. It can be understood that weighting and calculation methods for the scores for the daily average charging time length, the daily average charging capacity, the daily average number of charging times, and the average charging unit price may be configured as the actual conditions, provided the total score remains 100 points, and are not limited herein.

In this way, by obtaining the charging data of the charging station within the first predetermined time period, the daily average charging time length, the daily average charging capacity, the daily average number of charging times, and the average charging unit price of the charging station can be calculated based on the charging data, thereby calculating the operation score of the charging station. The charging cost performance of the charging stations can be determined by the user based on the operation scores, so that a charging station with high cost performance is selected, which improves the user's charging experience.

Referring to FIG. 5, in some embodiments, step S30 includes operations at steps S31 and S32.

At step S31, an online utilization rate, a failure rate, a pile charging interruption rate, average power, and years in service of one or more charging piles are obtained based on the charging pile information.

At step S32, the device score of the charging station is calculated based on the online utilization rate, the failure rate, the pile charging interruption rate, the average power, and the years in service.

In some embodiments, steps S31 and S32 may be implemented by the second generation module 30. That is, the second generation module 30 is configured to obtain the online utilization rate, the failure rate, the pile charging interruption rate, the average power, and the years in service of one or more charging piles based on the charging pile information, and calculate the device score of the charging station based on the online utilization rate, the failure rate, the pile charging interruption rate, the average power, and the years in service.

Specifically, in response to the cloud server obtaining the charging station information, online utilization rates, failure rates, pile charging interruption rates, average power, and years in service of all charging piles in the charging station can be obtained based on the charging station information. It can be understood that the online utilization rate is a ratio of a time that the charging pile is in a normal state to a total time. The failure rate is a ratio of a time that the charging pile is in an abnormal state to the total time. The pile charging interruption rate is a ratio of the number of abnormal responses of the charging pile under power supply to the number of power supply times. The average power is a mean value of power supply power of the charging pile. The years in service is a time period from initial mounting of the charging pile to the present.

Further, the device score of the charging station can be calculated based on the online utilization rate, the failure rate, the pile charging interruption rate, the average power, and the years in service. For example, taking one month's data as an example, the online utilization rate is calculated as the ratio of the time that the charging pile is in the normal state to a total time in a month. A maximum score for the online utilization rate is 100 points. An online utilization rate of 100% is scored as 100 points. For every 1% decrease in the online utilization rate, 10 points are deducted. When the online utilization rate falls below 90%, the score is 0 points. A maximum score for the failure rate is 100 points. When the failure rate is 0%, the score is 100 points. For every 2% increase in the failure rate, 10 points are deducted. A failure rate exceeding 20% results in a score of 0 points. A maximum score for the pile charging interruption rate is 100 points. When the pile charging interruption rate is 0%, the score is 100 points. For every 3% increase in the pile charging interruption rate, 10 points are deducted. A pile charging interruption rate exceeding 30% results in a score of 0 points. A maximum score for the average power is 100 points. A score of 100 points is achieved when the average power exceeds 350 kW. For every 50 kW reduction, 10 points are deducted, with a minimum score of 0 points. A maximum score for the years in service is 100 points. A score of 100 points is achieved when the years in service is smaller than one year. For each additional year, 20 points are deducted. A score of 0 points is awarded for years in service of five years or more.

The device score can be calculated from the scores for the online utilization rate, the failure rate, the pile charging interruption rate, the average power, and the years in service. For example, a weight of the online utilization rate is 25%, a weight of the failure rate is 30%, a weight of the pile charging interruption rate is 25%, a weight of the average power is 10%, and a weight of the years in service is 10%. The device score, which is capped at 100 points, can be calculated by multiplying the scores for the online utilization rate, the failure rate, the pile charging interruption rate, the average power, and the years in service by their respective weights. It can be understood that a sum of the weights for the online utilization rate, the failure rate, the pile charging interruption rate, the average power, and the years in service is 1. Specific weight distribution can be configured as the actual conditions, and is not limited herein.

In this way, the online utilization rate, the failure rate, the pile charging interruption rate, the average power, and the years in service of one or more charging piles can be derived by obtaining the charging station information. In this way, the device score of the charging station can be calculated based on the online utilization rate, the failure rate, the pile charging interruption rate, the average power, and the years in service. The user can determine the quality of the charging piles based on the device scores and select a suitable charging pile for charging, thereby improving user experience.

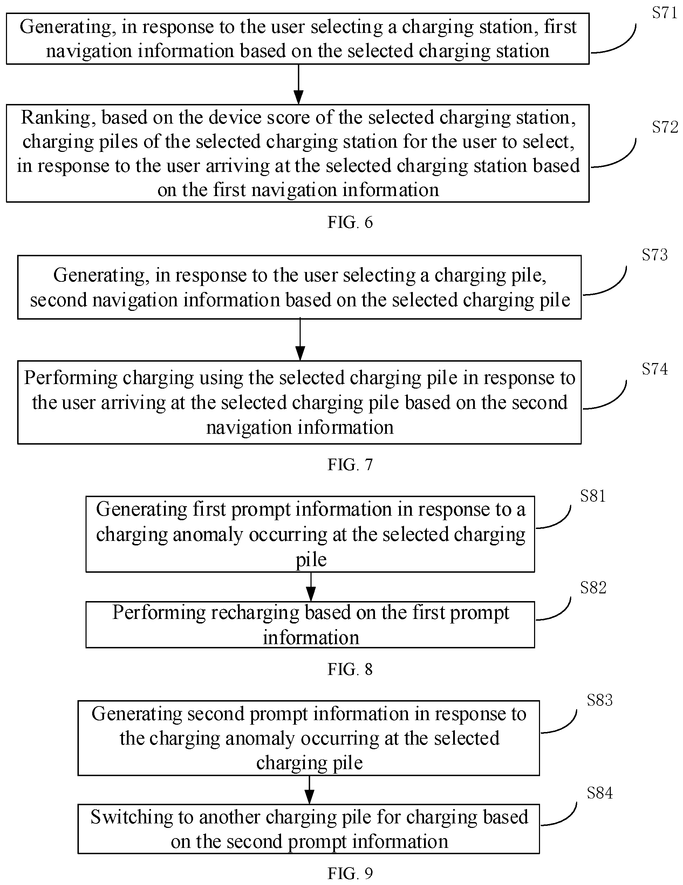

Referring to FIG. 6, in some embodiments, the recommendation method further includes operations at steps S71 and S72.

At step S71, in response to the user selecting a charging station, first navigation information based on the selected charging station is generated.

At step S72, in response to the user arriving at the selected charging station based on the first navigation information, charging piles are ranked based on the device score of selected the charging station for the user to select.

Specifically, the user selects a charging station at the vehicle terminal based on the ranking result of the charging stations. In response to the user selecting the charging station, the vehicle terminal can generate the first navigation information based on positioning information of the selected charging station and the vehicle, enabling the user to travel to the selected charging station based on the first navigation information. In response to the vehicle arriving at the selected charging station, the vehicle terminal can rank the charging piles of the selected charging station based on the device scores of the charging station and recommend the ranking result of the charging piles to the user, and the user can select a charging pile with a high device score for charging.

Referring to FIG. 7, in some embodiments, the recommendation method further includes operations at steps S73 and S74.

At step S73, in response to the user selecting a charging pile, second navigation information based on the selected charging pile is generated.

At step S74, charging is performed by using the selected charging pile in response to the user arriving at the selected charging pile based on the second navigation information.

Specifically, in response to the user selecting a charging pile based on the device score, the vehicle terminal can generate the second navigation information based on a position of the selected charging pile and a position of the vehicle, which enables the user to travel to the selected charging pile based on the second navigation information, thereby using the charging pile for charging.

Referring to FIG. 8, in some embodiments, the recommendation method further includes operations at steps S81 and S82.

At step S81, first prompt information is generated in response to a charging anomaly occurring at the selected charging pile.

At step S82, recharging is performed based on the first prompt information.

Specifically, when the user uses the selected charging pile for charging, in response to the charging anomaly occurring at the selected charging pile, the vehicle terminal can generate the first prompt information to prompt the user that there is a charging anomaly. For example, the first prompt information may read: "Please disconnect and reconnect a charging plug before restarting charging". The user can perform an operation based on the first prompt information to initiate recharging.

Further, referring to FIG. 9, the recommendation method further includes operations at steps S83 and S84.

At step S83, second prompt information is generated in response to the charging anomaly occurring at the selected charging pile.

At step S84, the user switches to another charging pile for charging based on the second prompt information.

Specifically, after the user performs the recharging, the vehicle terminal can redetermine whether the selected charging pile supplies power normally. In response to the charging anomaly occurring at the selected charging pile, the vehicle terminal can generate the second prompt information. For example, the second prompt information may read: "Please switch to another charging pile for charging". The user can switch to another charging pile for charging based on the second prompt information.

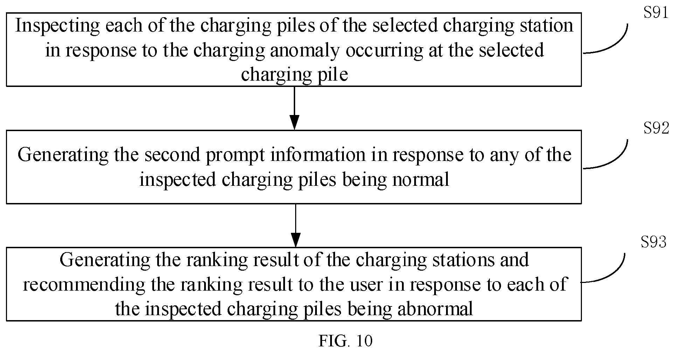

Referring to FIG. 10, in some embodiments, the recommendation method further includes operations at steps S91 to S93.

At step S91, each of the charging piles of the selected charging station is inspected in response to a charging anomaly occurring at the switched-to charging pile.

At step S92, the second prompt information is generated in response to one or more of the inspected charging piles being normal.

At step S93, in response to each of the inspected charging piles being abnormal, the ranking result of the charging stations is generated, and the ranking result is recommended to the user.

Specifically, after the user switches to another charging pile, the vehicle terminal re-determines whether the switched-to charging pile supplies power normally. In response to the charging anomaly occurring at the switched-to charging pile, the vehicle terminal can transmit an inspection request to the cloud server. After receiving the inspection request, the cloud server performs real-time inspection on all the charging piles of the selected charging station. In response to the cloud server determining that one or more of the charging piles is in the normal state, the vehicle terminal can re-generate the second prompt information, and the user switches to another charging pile for charging based on the second prompt information.

In response to the cloud server determining that each of the charging piles of the selected charging station is in the abnormal state, the cloud server can re-rank the charging stations within the predetermined distance range and transmit the ranking result to the vehicle terminal for the user to select. The user reselects a charging station based on the ranking result, and thus switches to the charging station for charging.

In this way, by generating the first navigation information in response to the user selecting the charging station, the user can travel to the selected charging station based on the first navigation information. Moreover, the charging piles are ranked based on the device scores in response to the user arriving at the charging station, enabling the user to select a good charging pile for charging. In response to a charging anomaly occurring at the selected charging pile, the first prompt information and the second prompt information are generated based on the abnormal state of the selected charging pile, which enables the user to operate based on the first prompt information and the second prompt information to complete charging, avoiding a case where the user does not know how to handle a charging pile failure, and thereby improving the user experience.

In descriptions of this specification, descriptions made with reference to terms such as "an embodiment", "some embodiments", "an illustrative embodiment", "an example", "a specific example", "some examples", or the like means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Further, the particular features, structures, materials, or characteristics described here may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A charging station recommendation method, **characterized by** comprising:
obtaining charging station information about one or more charging stations within a predetermined distance range, wherein the predetermined distance range is a drivable distance range of a vehicle based on remaining battery charge, and the charging station information comprises charging data, charging pile information, service information, and user evaluation information of each of the charging stations;
for each of the charging stations, generating an operation score for the charging station based on the charging data of the charging station;
for each of the charging stations, generating a device score for the charging station based on the charging pile information of the charging station;
for each of the charging stations, generating a service score for the charging station based on the service information;
for each of the charging stations, generating a user evaluation score for the charging station based on the user evaluation information; and
ranking the charging stations based on the operation score, the device score, the service score, and the user evaluation score, generating a ranking result for the charging stations, and recommending the ranking result to a user.

2. The method according to claim 1, wherein said generating the operation score for the charging station based on the charging data of the charging station comprises:
obtaining the charging data of the charging station within a first predetermined time period based on the charging station information;
calculating a daily average charging time length, a daily average charging capacity, a daily average number of charging times, and an average charging unit price of the charging station based on the charging data; and
calculating the operation score of the charging station based on the daily average charging time length, the daily average charging capacity, the daily average number of charging times, and the average charging unit price.

3. The method according to claim 1, wherein said generating the device score for the charging station based on the charging pile information of the charging station comprises:
obtaining an online utilization rate, a failure rate, a pile charging interruption rate, average power, and years in service of one or more charging piles based on the charging pile information; and
calculating the device score of the charging station based on the online utilization rate, the failure rate, the pile charging interruption rate, the average power, and the years in service.

4. The method according to claim 1, further comprising:
generating, in response to the user selecting a charging station among the one or more charging stations, first navigation information based on the selected charging station; and
in response to the user arriving at the selected charging station based on the first navigation information, ranking, based on the device score of the selected charging station, charging piles of the selected charging station for the user to select.

5. The method according to claim 4, further comprising:
generating, in response to the user selecting a charging pile among the charging piles, second navigation information based on the selected charging pile; and
performing charging using the selected charging pile in response to the user arriving at the selected charging pile based on the second navigation information.

6. The method according to claim 5, further comprising:
generating first prompt information in response to a charging anomaly occurring at the selected charging pile; and
performing recharging based on the first prompt information.

7. The method according to claim 6, further comprising:
generating second prompt information in response to the charging anomaly occurring at the selected charging pile; and
switching to another charging pile for charging based on the second prompt information.

8. The recommendation method according to claim 7, further comprising:
inspecting each of the charging piles of the selected charging station in response to the charging anomaly occurring at the switched-to charging pile; and
generating the second prompt information in response to any of the inspected charging piles being normal; or
in response to each of the inspected charging piles being abnormal, generating ranking result of the charging stations and recommending the ranking result to the user.

9. A charging station recommendation apparatus, **characterized by** comprising:
an obtaining module configured to obtain charging station information about one or more charging stations within a predetermined distance range, wherein the predetermined distance range is a drivable distance range of a vehicle based on remaining battery charge, and the charging station information comprises charging data, charging pile information, service information, and user evaluation information of each of the charging stations;
a first generation module configured to generate, for each of the charging stations, an operation score for the charging station based on the charging data of the charging station;
a second generation module configured to generate, for each of the charging stations, a device score for the charging station based on the charging pile information of the charging station;
a third generation module configured to generate, for each of the charging stations, a service score for the charging station based on the service information;
a fourth generation module configured to generate, for each of the charging stations, a user evaluation score for the charging station based on the user evaluation information; and
a ranking module configured to rank the charging stations based on the operation score, the device score, the service score, and the user evaluation score, generate a ranking result for the charging stations, and recommend the ranking result to a user.

10. A charging station recommendation system, **characterized by** comprising:
a cloud server configured to store charging station information, generate an operation score, a device score, a service score, and a user evaluation score based on the charging station information, rank one or more charging stations, generate a ranking result for the charging stations, and transmit the ranking result to a vehicle terminal; and
a mobile terminal configured to obtain real-time data of a vehicle, determine a predetermined distance range based on the real-time data, and transmit the predetermined distance range to the cloud server, wherein the mobile terminal is further configured to receive the ranking result and display the ranking result to a user.
